# EUROPÄISCHE PATENTANMELDUNG

(11) **EP 4 667 539 A1**
(43) Veröffentlichungstag der Anmeldung: **24.12.2025**
(21) Anmeldenummer: 24182944.9
(22) Anmeldetag: 18.06.2024
(51) Int. Cl.: C09D 11/101, C09D 11/037, C09D 11/03, B33Y 70/00

(54) **DRUCKPASTE SOWIE VERFAHREN ZUR HERSTELLUNG EINES DREIDIMENSIONALEN SIEBDRUCKWERKSTÜCKS MIT EINER DRUCKPASTE**

(71) Anmelder: Exentis Knowledge GmbH, 5608 Stetten AG (CH)
(72) Erfinder: AFDAL, Latifa, 5608 Stetten (CH); VAN GARDEREN, Noémie, 8952 Schlieren (CH); CLOOTS, Michael, 9008 St.Gallen (CH)
(74) Vertreter: Wenzel Nemetzade Warthmüller Patentanwälte Part mbB

(57) **Zusammenfassung**

Druckpaste, insbesondere zur Herstellung von dreidimensionalen Siebdruckwerkstücken, mit einem Feststoff, mit wenigstens einem Monomer, mit einem Photoinitiator, mit wenigstens einem Rheologie-Additiv, wobei der Feststoff aus wenigstens einem Keramikwerkstoff und/oder Nichtmetallwerkstoff besteht und wobei der Massenanteil des Feststoffs mindestens 50% beträgt.

## Beschreibung

Die vorliegende Erfindung betrifft eine Druckpaste, insbesondere zur Herstellung von dreidimensionalen Siebdruckwerkstücken. Ebenso betrifft die Erfindung ein Verfahren zur Herstellung eines dreidimensionalen Siebdruckwerkstücks mit einer solchen Druckpaste.

Im Siebdruckverfahren kann in herkömmlicher Weise eine Druckfarbe beziehungsweise eine Druckpaste mit einem Druckrakel durch ein Drucksieb beziehungsweise durch eine Schablone hindurch auf das jeweils zu bedruckende Material beziehungsweise auf die jeweils vorhandene Unterlage gedruckt werden.

Die für das reine Bedrucken im Siebdruckverfahren verwendeten Druckfarben beziehungsweise Druckpasten eignen sich häufig nicht oder kaum für den schichtweisen Aufbau eines dreidimensionalen Werkstücks im Wege des dreidimensionalen Siebdruckverfahrens. Derartige Druckfarben oder Druckpasten können bereits nach zwei oder drei aufeinander gedruckten Schichten zu Schmierungen oder erheblichen Druckungenauigkeiten führen, die sich mit zunehmender Anzahl von Druckschichten noch weiter potenzieren können. Für den zweidimensionalen Siebdruck beziehungsweise für das reine Bedrucken entwickelte und verwendete Druckfarben oder Druckpasten sind für den dreidimensionalen Siebdruck mithin in der Regel zu flüssig und damit ungeeignet.

Für die Herstellung eines dreidimensionalen Siebdruckwerkstücks, nämlich aufweisend zahlreiche aufeinander angeordnete Schichten, ist einerseits eine geeignete Druckbarkeit der Druckpaste sicherzustellen. Hierdurch soll zunächst die Erzeugung einer präzisen Druckschicht durch ein Drucksieb mittels eines Rakels bei ausreichend hoher Wiederholgenauigkeit ermöglicht werden. Gleichzeitig besteht das Erfordernis einer guten Formbeständigkeit nach erfolgtem Druck einer Druckschicht, um einen präzisen Druck einer nachfolgend aufgetragenen Schicht zu ermöglichen.

Hierfür bedarf es unter anderem einer guten Trocknungsfähigkeit der Druckpaste nach erfolgtem Druck. Eine Trocknung erfolgt insbesondere durch Erwärmung in gesonderten Trocknungsöfen und ist mit verhältnismäßig hohem apparativem und energetischem Aufwand verbunden. Zudem kann eine thermische Trocknung mit relativ starken Schwindungen oder Schrumpfungen einhergehen. Dies ist bei der näheren Zusammensetzung der zu verwendenden Druckpaste zu Berücksichtigen und kann zu weiteren Restriktionen führen.

Vor dem oben dargelegten Hintergrund bestand die Aufgabe der Erfindung darin, eine Druckpaste anzugeben, die mit verringertem Aufwand eine Herstellung dreidimensionaler Siebdruckwerkstücke ermöglicht oder begünstigt. Ebenso betrifft bestand die Aufgabe darin, ein Verfahren zur Herstellung eines dreidimensionalen Siebdruckwerkstücks mit einer solchen Druckpaste anzugeben.

In Bezug auf die Druckpaste ist diese Aufgabe mit dem Gegenstand des Anspruchs 1 gelöst worden. Ein erfindungsgemäßes Verfahren ist Gegenstand von Anspruch 15. Vorteilhafte Ausgestaltungen sind Gegenstand der abhängigen Ansprüche und werden nachfolgend erörtert.

Eine erfindungsgemäße Druckpaste ist insbesondere zur Herstellung von dreidimensionalen Siebdruckwerkstücken ausgebildet und/oder konfiguriert. Eine erfindungsgemäße Druckpaste weist einen Feststoff, wenigstens einen Monomer, einen Photoinitiator und wenigstens ein Rheologie-Additiv auf. Dabei weist der Feststoff wenigstens einen Keramikwerkstoff und/oder wenigstens einen Nichtmetallwerkstoff auf und der Massenanteil des Feststoffs beträgt mindestens 50 %.

Durch einen erfindungsgemäß vorgesehenen Photoinitiator kann mit nur geringem Aufwand eine Aushärtung der Druckpaste nach erfolgtem Druck bewerkstelligt werden. Insbesondere kann durch einen Photoinitiator mit nur verhältnismäßig geringem Energieaufwand und relativ kurzer Verfahrensdauer die Aushärtung einer gedruckten Schicht realisiert werden.

Bei einem Photoinitiator handelt es sich insbesondere um eine chemische Verbindung, die nach Absorption von Licht, insbesondere von Ultraviolettlicht, in einer Photolyse-Reaktion zerfällt und reaktive Spezies bildet. Hierdurch kann eine Reaktion initiiert werden, bei der er sich insbesondere um eine Polymerisation handeln kann. Es kann sich mithin um eine Polymerisationsreaktion handeln. Eine solche Polymerisationsreaktion ist insbesondere eine Kettenreaktion, bei der Monomere zu Polymeren verknüpft werden. Die Monomere besitzen Mehrfachbindungen, an denen Radikale angreifen. Diese Mehrfachbindungen lösen sich auf und die Monomere werden aneinandergebunden. Eine solche Reaktion kann durch einen Photoinitiator mit nur geringem Aufwand initiiert werden und ermöglicht eine Aushärtung in nur kurzer Verfahrensdauer.

Die Erzeugung eines dreidimensionalen Siebdruckwerkstücks kann auf diese Weise in signifikant verkürzter Produktionsdauer erzielt werden. Zudem kann eine Aushärtung mittels eines Photoinitiators mit verringertem Wärmeeintrag und damit geringerer thermischer Beanspruchung des gedruckten Werkstoffs erfolgen. Gleichzeit kann der anlagentechnische Aufwand reduziert werden, da eine gesonderte thermische Trocknung, insbesondere in einem Trocknungsofen, vermieden werden kann. Je nach Anwendung und/oder Art des durch die Druckpaste erzeugten Werkstücks kann dessen Fertigung auch ohne Sinterung abgeschlossen werden, sodass der Wärmeeintrag besonders geringgehalten werden kann.

Durch das erfindungsgemäß vorgesehene Rheologie-Additiv lassen sich zudem die rheologischen Eigenschaften der Druckpaste gezielt beeinflussen. Insbesondere kann durch die Zugabe eines Rheologie-Additivs ein unerwünschtes Zerflie-βen der Druckpaste nach erfolgtem Druck vermieden werden, sodass eine ausreichend hohe Druckpräzision sichergestellt werden kann. Mittels der Zugabe eines Rheologie-Additivs kann ferner ermöglicht werden, dass eine ausreichende Benetzung eines Drucksiebs erfolgt, ohne dass dieses verklebt beziehungsweise verstopft. Durch das Rheologie-Additiv kann eine zu starke Verdickung gezielt verhindert werden.

Schließlich kann ein verhältnismäßig hoher Feststoffanteil von mindestens 50 Gew.-% besonders gute mechanische Eigenschaften der jeweils gedruckten Werkstücke gewährleisten. Gleichzeitig kann mit einem hohen Feststoffanteil eine hohe Druckpräzision begünstigt werden. Schließlich kann durch einen derart hohen Feststoffanteil eine vereinfachte Entbinderung gewährleistet und eine unerwünschte Schrumpfung vor, während und/oder nach einer Aushärtung und/oder Sinterung vermeiden werden.

Insgesamt kann auf diese Weise eine hohe Werkstückqualität gewährleistet werden, bei gleichzeitig guter Druckbarkeit und effizienter Verfahrensführung.

Gemäß einer bevorzugten Ausgestaltung der Druckpaste kann der Feststoff eine Oxidkeramik und/oder eine Nicht-Oxidkeramik aufweisen. Ferner kann der Feststoff Aluminiumnitrid und/oder Aluminiumoxid und/oder Zirconiumdioxid und/oder Graphit aufweisen. Durch derartige Werkstoffe lassen sich in Bezug auf die jeweiligen Anwendungen Werkstücke von hoher Qualitätsgüte erzeugen.

Gemäß einer weiter bevorzugten Ausgestaltung kann der Feststoff in Pulverform erzeugt und/oder eingemischt sein und/oder dass der Feststoff kann aus Pulvermaterial bestehen. Ferner kann der Feststoff aus einem Keramikpulver, insbesondere Aluminiumnitrid und/oder Aluminiumoxid und/oder Zirconiumdioxid und/oder Graphit in Pulverform, erzeugt sein und/oder bestehen. Ein derartiger Feststoff lässt sich mit nur verhältnismäßig geringem Aufwand bereitstellen und gleichmäßig innerhalb der Druckpaste verteilen, sodass im Ergebnis eine hohe Druckgüte erzielt werden kann.

Gemäß einer weiter bevorzugten Ausgestaltung kann der Massenanteil des Feststoffs und/oder des wenigstens einen Keramikwerkstoffs und/oder des Aluminiumnitrids und/oder Aluminiumoxids mehr als 50 % betragen, bevorzugt mehr als 55 %, weiter bevorzugt mehr als 60 %, noch weiter bevorzugt mehr als 65 %, noch weiter bevorzugt mehr als 70 %, noch weiter bevorzugt von mehr als 75 %. Auf diese Weise lassen sich die mechanischen Eigenschaften der jeweils gedruckten Werkstücke und/oder die Druckpräzision weiter verbessern. Zudem kann auf diese Weise eine weiter vereinfachte Entbinderung gewährleistet und eine unerwünschte Schrumpfung vor, während und/oder nach einer Aushärtung und/oder Sinterung in weiter verbesserter Weise vermeiden werden.

Gemäß einer noch weiter bevorzugten Ausgestaltung kann der Massenanteil des Feststoffs und/oder des wenigstens einen Keramikwerkstoffs und/oder des Aluminiumnitrids und/oder Aluminiumoxids weniger als 90 % betragen, bevorzugt weniger als 85 %, weiter bevorzugt weniger als 80 % betragen. Hierdurch lässt sich eine gute Druckbarkeit sicherstellen, insbesondere ausreichend flüssige Eigenschaften der Druckpaste, durch die eine Druck durch ein Drucksieb hindurch ermöglicht werden kann.

Gemäß einer noch weiter bevorzugten Ausgestaltung kann der Photoinitiator zur Erzeugung und/oder Initiierung einer Photopolymerisation ausgebildet sein, insbesondere durch Absorption von sichtbarem oder ultraviolettem Licht initiiert. Ebenso kann der Photoinitiator zur Erzeugung und/oder Initiierung einer UV-basierten Härtung ausgebildet sein. Durch einen solchen Photoinitiator kann mit besonders geringem Aufwand und nur kurzer Verfahrensdauer eine geeignete Aushärtung der Druckpaste erzielt werden. Zudem kann ein solcher Photoinitiator kostengünstig bereitgestellt werden und ermöglicht damit eine besonders wirtschaftliche Fertigung von dreidimensionalen Siebdruckwerkstücken.

Gemäß einer noch weiter bevorzugten Ausgestaltung kann der Photoinitiator dazu ausgebildet sein, nach Absorption von sichtbarem oder ultraviolettem Licht in einer Photolyse-Reaktion zu zerfallen und reaktive Spezies zu bilden, die zur Initiierung einer Polymerisation ausgebildet sind, insbesondere zur Initiierung einer UV-Härtung nach dem Mechanismus der radikalischen Kettenpolymerisation. Auf diese Weise kann eine Aushärtung der Druckpaste mit besonders hoher Zuverlässigkeit und hoher Aushärtungsgeschwindigkeit erreicht werden.

Gemäß einer noch weiter bevorzugten Ausgestaltung kann der Photoinitiator Ethyl Phenyl(2,4,6-trimethylbenzoyl)Phosphinat aufweisen, bevorzugt mit einer Reinheit von mindestens 90 % oder mindestens 95 %. Ein solcher Photoinitiator ist verhältnismäßig kostengünstig in der Anschaffung und gewährleistet ein gutes Aushärtungsverhalten und eine hohe Reaktivität.

Gemäß einer noch weiter bevorzugten Ausgestaltung kann der Photoinitiator ein Hydroxyacetophenon aufweisen. Auch ein solcher Photoinitiator ist verhältnismäßig kostengünstig in der Anschaffung und gewährleistet gleichzeitig ein gutes Aushärtungsverhalten, ohne Beeinträchtigung des Druckverhaltens.

Gemäß einer noch weiter bevorzugten Ausgestaltung kann der Photoinitiator 1-Hydroxycyclohexyl Phenyl Keton aufweisen. Ein solcher Photoinitiator gewährleistet ebenso ein gutes Aushärtungsverhalten und eine geringe Neigung zur Vergilbung.

Gemäß einer noch weiter bevorzugten Ausgestaltung kann der Massenanteil des Photoinitiators weniger als 2 % betragen, bevorzugt weniger als 1,5 % oder weniger als 1 %, bevorzugt weniger als 0,5 %, weiter bevorzugt weniger als 0,1 %. Durch einen derart geringen Massenanteil des Photoinitiators wird das Druckverhalten sowie auch das mechanische Verhalten nach erfolgtem Druck nicht oder nur in geringem Umfang beeinträchtigt.

Gemäß einer noch weiter bevorzugten Ausgestaltung kann der Massenanteil des Photoinitiators mindestens 0,01 % betragen, bevorzugt mehr als 0,01 % oder mehr als 0,02 % oder mehr als 0,03 % oder etwa 0,04%. Eine solche Mindestmenge des Photoinitiators gewährleistet eine ausreichend hohe Prozesssicherheit für die Aushärtung der Druckpaste.

Gemäß einer noch weiter bevorzugten Ausgestaltung kann die Druckpaste eine Mehrzahl von unterschiedlichen Monomeren aufweisen. Die Druckeigenschaften sowie auch die Polymerisationseigenschaften der Druckpaste können auf diese Weise besonders vorteilhaft beeinflusst werden.

Gemäß einer noch weiter bevorzugten Ausgestaltung kann das wenigstens eine Monomer oder wenigstens ein Monomer eine Vielzahl von Monomeren der Druckpaste ein Acrylatmonomer sein, insbesondere ein Diacrylat. Zusätzlich oder alternativ können mehrere oder sämtliche Monomere der Druckpaste Acrylatmonomere sein. Die Verwendung eines Acrylatmonomers oder mehrerer Acrylatmonomere hat sich für die Aushärtung mittels eines Photoinitiators als besonders günstig erwiesen. Es lassen sich gute Druckergebnisse und bei gleichzeitig guter Aushärtbarkeit realisieren.

Gemäß einer noch weiter bevorzugten Ausgestaltung kann das wenigstens eine Monomer oder wenigstens ein Monomer der Druckpaste ein monofunktioneller oder bifunktioneller Monomer sein. Zusätzlich oder alternativ können mehrere oder sämtliche Monomere der Druckpaste monofunktionelle und/oder bifunktionelle Monomere sind oder höchstens bifunktionelle Monomere sein. Die Reaktivität beziehungsweise die Polymerisationseigenschaften der Druckpaste können auf diese Weise gezielt eingestellt werden.

Zusätzlich oder alternativ kann das wenigstens eine Monomer oder wenigstens ein Monomer der Druckpaste ein trifunktioneller oder mehrfunktioneller Monomer sein, insbesondere mit einer Funktionalität von drei oder mehr als drei. Die Reaktivität kann hierdurch erhöht werden, wodurch die Polymerisationseigenschaften der Druckpaste beeinflusst werden können.

Gemäß einer noch weiter bevorzugten Ausgestaltung kann der Massenanteil des Monomers oder der Monomere wenigstens 5 % betragen, bevorzugt mehr als 5 %, weiter bevorzugt mehr als 6 %, weiter bevorzugt mehr als 7 %, weiter bevorzugt mehr als 8 %, weiter bevorzugt mehr als 9 %, weiter bevorzugt mehr als 10 %, weiter bevorzugt mehr als 11 %, weiter bevorzugt mehr als 12 % oder etwa 12 %. Mit einem derartigen Mindestanteil eines Monomers oder von Monomeren kann in geeigneter Weise eine Polymerisation und damit Aushärtung nach erfolgtem Druck sichergestellt werden.

Gemäß einer noch weiter bevorzugten Ausgestaltung kann der Massenanteil des Monomers oder der Monomere weniger als 15 % betragen, bevorzugt weniger als 14 %, weiter bevorzugt weniger als 13 %, weiter bevorzugt weniger als 12,5 %. Durch einen derart begrenzten Massenanteil des Monomers oder der Monomere kann ein verhältnismäßig hoher Massenanteil an Feststoff in der Druckpaste eingestellt werden, was sich günstig auf die Eigenschaften des finalen Werkstücks auswirken kann.

Gemäß einer noch weiter bevorzugten Ausgestaltung kann das wenigstens eine Monomer oder wenigstens ein Monomer ein Polyethylen Glycol (200) Diacrylat sein. Polyethylen Glycol (200) Diacrylat ist ein bifunktionelles Acrylmonomer, das sich in besonders bevorzugter Weise zur Aushärtung durch Einsatz eines Photoinitiators, insbesondere unter Verwendung von Ultraviolettlicht und/oder Elektronenstrahleinwirkung, oder als Co-Monomer für die Polymersynthese eignet. Gleichzeitig kann durch ein solches Monomer eine verhältnismäßig hohe Flexibilität des erzeugten Drucks erzielt werden.

Gemäß einer noch weiter bevorzugten Ausgestaltung kann der Massenanteil an Polyethylen Glycol (200) Diacrylat wenigstens 5 % betragen, bevorzugt mehr als 5 %, weiter bevorzugt mehr als 6 %, weiter bevorzugt mehr als 7 %, weiter bevorzugt mehr als 8 %, weiter bevorzugt mehr als 9 %, weiter bevorzugt mehr als 10 %, weiter bevorzugt mehr als 11 %, weiter bevorzugt mehr 11 %. Mit einem solchen Mindestanteil an Polyethylen Glycol (200) Diacrylat lässt sich eine Aushärtung beziehungsweise Polymerisation mit besonders hoher Sicherheit und Zuverlässigkeit erzielen.

Gemäß einer noch weiter bevorzugten Ausgestaltung kann der Massenanteil an Polyethylen Glycol (200) Diacrylat weniger als 15 % betragen, bevorzugt weniger als 14 %, weiter bevorzugt weniger als 13 %, weiter bevorzugt weniger als 12 %. Durch einen solchen Massenanteil von Polyethylen Glycol (200) Diacrylat kann ein ausreichend hoher Massenteil von Feststoff in der Druckpaste vorgesehen werden, wodurch wiederum die mechanischen Eigenschaften des erzeugten Werkstücks und auch die Fertigungspräzision begünstigt werden können.

Gemäß einer noch weiter bevorzugten Ausgestaltung kann das wenigstens eine Monomer oder wenigstens ein Monomer ein Tertiobutyl Cyclohexyl Acrylat sein. Insbesondere kann es sich bei einem solchen Monomer um ein Monomer mit der registrierten Bezeichnung 4-(1,1-Dimethylethyl)cyclohexylacrylat handeln. Bei dem Monomer Tertiobutyl Cyclohexyl Acrylat beziehungsweise 4-(1,1-Dimethylethyl)cyclohexylacrylat handelt es sich um ein niedrigviskoses, aliphatisches, monofunktionales Monomer, das sich insbesondere zur Aushärtung durch Einsatz eines Photoinitiators, insbesondere unter Verwendung von Ultraviolettlicht und/oder Elektronenstrahleinwirkung, in Druckpasten eignet. Durch ein solches Monomer wird zudem die Haftung verbessert. Das Monomer Tertiobutyl Cyclohexyl Acrylat eignet sich mithin besonders vorteilhaft als Haftvermittler und begünstigt somit auch den Gefügezusammenhalt der Druckpaste und/oder die Verbindung unterschiedlicher Druckschichten zueinander.

Gemäß einer noch weiter bevorzugten Ausgestaltung kann der Massenanteil an Tertiobutyl Cyclohexyl Acrylat beziehungsweise 4-(1,1-Dimethylethyl)cyclohexylacrylat wenigstens 0,5 % betragen, bevorzugt mehr als 0,5 %, weiter bevorzugt mehr als 0,6 %, weiter bevorzugt mehr als 0,7 %, weiter bevorzugt mehr als 0,8 %, weiter bevorzugt mehr als 0,9 %, weiter bevorzugt etwa 1 %. Es ergeben sich für den jeweiligen Druckvorgang beziehungsweise den schichtweisen Aufbau mehrerer Druckschichten im Wege des dreidimensionalen Siebdrucks besonders gute Hafteigenschaften, ohne übermäßige Verklebungen zu erzeugen.

Gemäß einer noch weiter bevorzugten Ausgestaltung kann der Massenanteil an Tertiobutyl Cyclohexyl Acrylat beziehungsweise 4-(1,1-Dimethylethyl)cyclohexylacrylat weniger als 2 % betragen, bevorzugt weniger als 1,5 %, weiter bevorzugt weniger als 1,2 %, weiter bevorzugt weniger als 1,1 %. Mit einer solchen Beschränkung des Massenanteils kann eine übermäßige Verklebung der Druckpaste im Druckprozess mit hoher Sicherheit vermieden werden.

Gemäß einer noch weiter bevorzugten Ausgestaltung kann das wenigstens eine Monomer oder wenigstens ein Monomer ein ethoxyliertes Trimethylolpropan-Triacrylat sein. Es handelt es sich um ein niedrigviskoses, bifunktionelles Monomer, insbesondere Acrylat-Monomer, das sich insbesondere zur Aushärtung durch Einsatz eines Photoinitiators, insbesondere unter Verwendung von Ultraviolettlicht und/oder Elektronenstrahleinwirkung, in Druckpasten eignet. Ein solches Monomer weist insbesondere gute Polymerisationseigenschaften, Flexibilität sowie vorteilhafte Adhäsionseigenschaften auf.

Bei einem ethoxylierten Trimethylolpropan-Triacrylat kann es sich insbesondere um eine Stoffzusammensetzung mit der registrierten Bezeichnung Poly(oxy-1,2-ethandiyl). alpha. -hydro-. omega. -[(1-oxo-2- propenyl) oxy]-, ether mit 2-ethyl-2-(hydroxymethyl) -1,3-propandiol (3:1) handeln.

Gemäß einer noch weiter bevorzugten Ausgestaltung kann der Massenanteil an ethoxyliertem Trimethylolpropan-Triacrylat wenigstens 3 % betragen, bevorzugt mehr als 5 %, mehr als 8 % oder mehr als 10 %. Mit einem solchen Massenanteil kann eine zuverlässige Polymerisation bei gleichzeitig hoher Flexibilität sowie ausreichender Adhäsion der Druckschichten sichergestellt werden.

Gemäß einer noch weiter bevorzugten Ausgestaltung kann der Massenanteil an ethoxyliertem Trimethylolpropan-Triacrylat weniger als 15 %, bevorzugt weniger als 13 % oder weniger als 12 % oder weniger als 11 % betragen. Mit einer solchen Beschränkung des Massenanteils kann eine übermäßige Verklebung der Druckpaste im Druckprozess mit hoher Sicherheit vermieden werden und gleichzeitig ein hoher Massenanteil des Feststoffs ermöglicht werden.

Gemäß einer noch weiter bevorzugten Ausgestaltung kann das wenigstens eine Monomer oder wenigstens ein Monomer ein niedrigviskoses bifunktionelles Acrylat-Monomer sein. Durch ein bifunktionelles Acrylat-Monomer kann eine geeignete Reaktivität der Druckpaste im Hinblick auf eine Polymerisation erzielt werden. Ein niedrigviskoses bifunktionelles Acrylat-Monomer ermöglicht darüber hinaus eine ausreichende Fließfähigkeit, die bei Bedarf durch eine gezielte Menge des Rheologie-Additivs eingestellt werden kann.

Gemäß einer noch weiter bevorzugten Ausgestaltung kann das wenigstens eine Monomer oder wenigstens ein Monomer ein Tricyclodecanedimethanol Diacrylat sein. Hierbei handelt es sich ebenfalls um ein bifunktionelles Monomer, insbesondere Acrylat-Monomer, das sich in besonders bevorzugter Weise zur Aushärtung durch Einsatz eines Photoinitiators, insbesondere unter Verwendung von Ultraviolettlicht und/oder Elektronenstrahleinwirkung, in Druckpasten eignet. Ein solches Monomer weist insbesondere gute Polymerisationseigenschaften, Flexibilität sowie vorteilhafte Adhäsionseigenschaften auf.

Gemäß einer noch weiter bevorzugten Ausgestaltung kann der Massenanteil an Tricyclodecanedimethanol Diacrylat wenigstens 1 % oder wenigstens 2% und/oder weniger als 5 % oder weniger als 4 % betragen. Mit einem solchen Massenanteil kann eine übermäßige Verklebung der Druckpaste im Druckprozess vermieden werden und gleichzeitig eine gute Polymerisation sowie ein hoher Massenanteil des Feststoffs ermöglicht werden.

Gemäß einer noch weiter bevorzugten Ausgestaltung kann das wenigstens eine Monomer oder wenigstens ein Monomer ein Dipropylen Glycol Diacrylat sein. Es handelt sich bei Dipropylen Glycol Diacrylat (DPGDA) um ein Acrylat-Monomer mit verhältnismäßig niedriger Viskosität, geringer Flüchtigkeit sowie schneller Aushärtbarkeit und guter Verdünnung. Dieser Bestandteil kann in vorteilhafter Weise als klare Flüssigkeit in die Druckpaste zugemischt werden und/oder enthalten sein und eignet sich insbesondere für die Aushärtung mittels eines Photoinitiators durch Polymerisation.

Gemäß einer noch weiter bevorzugten Ausgestaltung kann der Massenanteil an Dipropylen Glycol Diacrylat wenigstens 1 % oder wenigstens 2 % oder wenigstens 5 % oder weniger als 10 % oder weniger als 8 % oder weniger als 7 % betragen. Mit einem solchen Massenanteil kann eine vorteilhafte Aushärtung der Druckpaste nach erfolgtem Druckprozess sowie eine gute Druckbarkeit sichergestellt und gleichzeitig eine ein hoher Massenanteil des Feststoffs ermöglicht werden.

Gemäß einer noch weiter bevorzugten Ausgestaltung kann die Druckpaste wenigstens einen Oligomer oder eine Mehrzahl von unterschiedlichen Oligomeren aufweisen. Durch wenigstens einen Oligomer oder eine Mehrzahl von Oligomeren kann eine Polymerisation, insbesondere ausgelöst nach Absorption von Licht durch einen Photoinitiator, in besonders vorteilhafter Weise und mit hoher Zuverlässigkeit erfolgen.

Gemäß einer noch weiter bevorzugten Ausgestaltung kann das wenigstens eine Oligomer ein Acrylat-Oligomer sein oder mehrere oder sämtliche Oligomere können Acrylat-Oligomere sein. Ein Acrylat-Oligomer kann hervorragende Reaktionsfähigkeiten aufweisen und eine geeignete Aushärtung durch Polymerisation in vorteilhafter Weise begünstigen.

Gemäß einer noch weiter bevorzugten Ausgestaltung kann das wenigstens eine Oligomer ein Polyester oder Polyether sein. Ein solches Oligomer kann besonders kostengünstig bereitgestellt werden und damit eine ausgesprochen wirtschaftliche Fertigung von dreidimensionalen Siebdruckwerkstücken ermöglichen.

Gemäß einer noch weiter bevorzugten Ausgestaltung kann das wenigstens eine Oligomer ein monofunktioneller oder bifunktioneller Oligomer sein und/oder mehrere oder sämtliche Oligomere können monofunktionelle und/oder bifunktionelle Oligomere sein oder höchstens bifunktionelle Oligomere sein. Ebenso können in der Druckpaste als Oligomere ausschließlich monofunktionelle oder bifunktionelle Oligomere enthalten sein. Auf diese Weise kann die Reaktivität der Druckpaste in besonders vorteilhafter Weise eingestellt sein und ein sicherer und zuverlässiger Polymerisationsvorgang gewährleistet werden.

Gemäß einer noch weiter bevorzugten Ausgestaltung kann das wenigstens eine Oligomer ein aliphatisches Urethan-Acrylat sein. Aliphatisches Urethan-Acrylat weist gute mechanische Eigenschaften, gute Reaktivität und Aushärtbarkeit sowie eine niedrige Viskosität auf.

Gemäß einer noch weiter bevorzugten Ausgestaltung kann das wenigstens eine Oligomer ein hexafunktionales aliphatisches Urethan-Acrylat sein. Ein solches Urethan-Acrylat weist besonders vorteilhafte mechanische Eigenschaften, eine besonders geeignete Reaktivität und Aushärtbarkeit sowie eine niedrige Viskosität auf.

Gemäß einer noch weiter bevorzugten Ausgestaltung kann das wenigstens eine Oligomer ein aliphatisches polyester-basiertes und/oder polyether-basiertes Urethan-Acrylat-Oligomer sein. Ein solches Urethan-Acrylat kann verhältnismäßig kostengünstig bereitgestellt werden und weist gleichzeitig vorteilhafte mechanische Eigenschaften, eine besonders geeignete Reaktivität und Aushärtbarkeit auf und gewährleistet eine niedrige Viskosität.

Gemäß einer noch weiter bevorzugten Ausgestaltung kann das wenigstens eine Oligomer ein bifunktionelles Epoxy-Acrylat sein. Es kann sich hierbei insbesondere um einen Bisphenol A Epoxy-Acrylat handeln. Ein solches Epoxy-Acrylat kann als farblose Flüssigkeit zugemischt werden und für eine hohe Reaktivität gewährleisten und hervorragende chemische und mechanische Beständigkeitseigenschaften begünstigen. Ein solches Epoxy-Acrylat eignet sich in besonders bevorzugter Weise für die Aushärtbarkeit der Druckpaste durch Absorption von Licht.

Gemäß einer noch weiter bevorzugten Ausgestaltung kann der Massenanteil des Oligomers oder der Oligomere wenigstens 5 % betragen, bevorzugt mehr als 5 %, weiter bevorzugt mehr als 6 %, weiter bevorzugt mehr als 7 %, weiter bevorzugt mehr als 8 % oder etwa 8 %. Durch einen solchen Anteil können gute mechanische Eigenschaften sowie eine besonders vorteilhafte Reaktivität der Druckpaste sichergestellt werden.

Gemäß einer noch weiter bevorzugten Ausgestaltung kann der Massenanteil des Oligomers oder der Oligomere weniger als 15 % betragen, bevorzugt weniger als 12 %, weiter bevorzugt weniger als 10 %, weiter bevorzugt weniger als 9 %. Durch einen derart begrenzten Massenanteil des Oligomers oder der Oligomere kann ein verhältnismäßig hoher Massenanteil an Feststoff in der Druckpaste eingestellt werden und eine zu hohe Reaktivität der Druckpaste kann vermieden werden. Insgesamt kann sich eine solche Druckpaste günstig auf die Eigenschaften des finalen Werkstücks auswirken.

Gemäß einer noch weiter bevorzugten Ausgestaltung kann die Druckpaste frei von polyfunktionellen Monomeren und/oder frei von polyfunktionellen Oligomeren erzeugt sein. Eine unerwünscht hohe Reaktivität lässt sich damit verhindern.

Gemäß einer noch weiter bevorzugten Ausgestaltung kann die Druckpaste wenigstens ein gesondertes Lösungsmittel, insbesondere ein organisches Lösungsmittel, aufweisen. Ein solches Lösungsmittel eignet sich in besonders bevorzugter Weise zur Verdünnung der Druckpaste und kann damit eine gute Fließfähigkeit und/oder Druckbarkeit im Wege des dreidimensionalen Siebdrucks gewährleisten.

Gemäß einer noch weiter bevorzugten Ausgestaltung kann das gesonderte Lösungsmittel Glykolehter aufweisen, insbesondere Dipropylenglycolmethylether und/oder Dipropylenglykolmonomethylether. Ein solches Lösungsmittel hat sich als Bestandteil einer Druckpaste für den Einsatz im dreidimensionalen Siebdruckverfahren als besonders vorteilhaft erwiesen.

Gemäß einer noch weiter bevorzugten Ausgestaltung kann der Massenanteil an gesondertem Lösungsmittel wenigstens 0,5 % betragen, bevorzugt mehr als 0,5 %, weiter bevorzugt mehr als 0,6 %, weiter bevorzugt mehr als 0,7 %, weiter bevorzugt mehr als 0,8 %, weiter bevorzugt mehr als 0,9 %, weiter bevorzugt etwa 1 %. Ein Lösungsmittel in einer solchen Menge lässt sich nach erfolgtem Druck mit nur geringem Aufwand durch eine Entbinderung wieder entfernen und gewährleistet gleichzeitig eine ausreichende Verdünnung.

Gemäß einer noch weiter bevorzugten Ausgestaltung kann der Massenanteil an gesondertem Lösungsmittel weniger als 2 % betragen, bevorzugt weniger als 1,5 %, weiter bevorzugt weniger als 1,2 %, weiter bevorzugt weniger als 1,1 %. Hierdurch können die Fließeigenschaften in besonders vorteilhafter begünstigt werden, insbesondere eine zu starke Fließfähigkeit vermieden werden.

Gemäß einer noch weiter bevorzugten Ausgestaltung kann die Druckpaste zumindest ein Dispergier-Additiv aufweisen. Durch den Einsatz eines solchen Dispergier-Additivs kann ein besonders hoher Feststoffanteil in der Druckpaste realisiert werden. Es lässt sich eine besonders gleichmäßige Vermischung des jeweiligen Feststoffs in der Druckpaste sicherstellen und dadurch eine hohe Druckqualität gewährleisten.

Gemäß einer noch weiter bevorzugten Ausgestaltung kann das Dispergier-Additiv ein Netz- und Dispergier-Additiv sein oder ausschließlich als Dispergier-Additiv wirken. Durch ein Netz- und Dispergier-Additiv kann in besonders bevorzugter Weise eine auch eine gute Benutzung der Druckpaste sichergestellt werden, insbesondere, insbesondere ohne, dass in einem Drucksieb oder nach dem Druck nicht-benetzte Bereiche oder trockene Stellen entstehen oder übrigbleiben. Eine Ausgestaltung als ausschließliches Dispergier-Additiv kann mit geringem Aufwand und zu verringerten Kosten bereitgestellt werden.

Gemäß einer noch weiter bevorzugten Ausgestaltung kann das Dispergier-Additiv eine Lösung eines hochmolekularen Block-Copolymeren mit pigmentaffinen Gruppen sein. Ein solches Additiv erzielt eine besonders vorteilhafte Stabilisierung, insbesondere von organischen Pigmenten beziehungsweise Partikeln. Zudem kann eine deflockulierende Wirkung gewährleistet werden. Ein solches Additiv kann eine besonders hohe Verträglichkeit mit zahlreichen Oligomeren und Monomeren aufweisen, insbesondere Oligomeren und Monomeren, die in UV-härtenden System eingesetzt werden.

Gemäß einer noch weiter bevorzugten Ausgestaltung kann das Dispergier-Additiv ein Copolymer mit sauren Gruppen aufweisen. Es kann sich bei einem solchen Dispergier-Additiv insbesondere um Phosphorsäureester handeln. Ein solches Additiv kann durch sterische Stabilisierung eine Deflockulation von Pigmenten beziehungsweise Partikeln gewährleisten. Weiterhin kann die Viskosität reduziert werden und die Deckfähigkeit verbessert sich. Auf diese Weise kann zudem auch das Verlaufsverhalten verbessert werden.

Gemäß einer noch weiter bevorzugten Ausgestaltung kann das Dispergier-Additiv einen Massenanteil der Wirksubstanz von mindestens 20 % und/oder von weniger als 40 % aufweist, insbesondere von 30 % oder etwa 30 %. Ebenso kann das Dispergier-Additiv einen Massenanteil der Wirksubstanz von mindestens 50 %, mindestens 60%, mindestens 70%, mindestens 80%, mindestens 90% oder 100% oder etwa 100% aufweisen. Ein solches Dispergier-Additiv kann mithin eine geringe Konzentration aufweisen und damit präzise dosiert werden. Ebenso kann eine hohe Konzentration vorgesehen sein, sodass durch Zugabe des Dispergier-Additivs eine nur geringe Verdünnung der Druckpaste einhergeht.

Gemäß einer noch weiter bevorzugten Ausgestaltung kann das Dispergier-Additiv als Lösemittel Propoxyliertes Glyceryltriacrylat (GPTA) aufweist. Ein solches Lösungsmittel kann kostengünstig bereitgestellt werden und gewährleistet eine geeignete Verdünnung der jeweiligen Wirksubstanz.

Gemäß einer noch weiter bevorzugten Ausgestaltung kann der Massenanteil des Dispergier-Additivs wenigstens 0,5 % beträgt, bevorzugt mehr als 0,5 %, weiter bevorzugt mehr als 0,6 %, weiter bevorzugt mehr als 0,7 %, weiter bevorzugt mehr als 0,8 %, weiter bevorzugt mehr als 0,9 %, weiter bevorzugt etwa 1 %. Ein solcher Massenanteil kann eine ausreichende Vermischung und Benetzung bei gleichzeitig geringer Beeinträchtigung der Gesamtzusammensetzung der Druckpaste gewährleisten.

Gemäß einer noch weiter bevorzugten Ausgestaltung kann der Massenanteil des Dispergier-Additivs weniger als 2 % betragen, bevorzugt weniger als 1,5 %, weiter bevorzugt weniger als 1,2 %, weiter bevorzugt weniger als 1,1 %. Durch eine derartige Begrenzung des Dispergier-Additivs können weitere Bestandteile der Druckpaste in verhältnismäßig hohen Massenanteilen vorgesehen sein, insbesondere ein hoher Massenanteil des Feststoffs.

Gemäß einer noch weiter bevorzugten Ausgestaltung kann die Druckpaste eine Mehrzahl von unterschiedlichen Rheologie-Additiven aufweisen. Die rheologischen Eigenschaften können auf diese Weise besonders vorteilhaft eingestellt sein, insbesondere im Hinblick auf die weiteren Bestandteile der Druckpaste sowie deren Massenanteile.

Gemäß einer noch weiter bevorzugten Ausgestaltung kann der Massenanteil des Rheologie-Additivs oder der Rheologie-Additive wenigstens 1 % betragen, bevorzugt mehr als 1 %, weiter bevorzugt mehr als 1,5 %, weiter bevorzugt mehr als 2 %, weiter bevorzugt mehr als 2,5 %, weiter bevorzugt mehr als 3 %, weiter bevorzugt mehr als 3,5 %, weiter bevorzugt etwa 3,6 % oder 3,6 %. Durch die Zugabe eines rheologischen Additivs in einem solchen Massenanteil kann das Fließverhalten der Druckpaste in ausreichender Weise beeinflusst und damit die Fertigung im Wege des 3D-Siebdrucks begünstigt werden.

Gemäß einer noch weiter bevorzugten Ausgestaltung kann der Massenanteil des Rheologie-Additivs oder der Rheologie-Additive weniger als 5 % betragen, bevorzugt weniger als 4,5 %, weiter bevorzugt weniger als 4 %, weiter bevorzugt weniger als 3,8 %. Durch die Zugabe eines rheologischen Additivs in einem derart begrenzten Massenanteil kann das Fließverhalten der Druckpaste einerseits ausreichend beeinflusst und die Fertigung im Wege des 3D-Siebdrucks begünstigt werden. Zudem kann eine Entbinderung eines derart begrenzten Massenanteils mit nur geringem Aufwand bewerkstelligt werden.

Gemäß einer noch weiter bevorzugten Ausgestaltung kann das wenigstens eine Rheologie-Additiv eine flüssige Substanz sein und/oder in flüssiger Form eingemischt sein. Auf diese Weise kann die Druckpaste mit nur geringem Aufwand hergestellt und beispielsweise für einen dreidimensionalen Siebdruckvorgang zur Verfügung gestellt werden.

Gemäß einer noch weiter bevorzugten Ausgestaltung kann das wenigstens eine Rheologie-Additiv eine pulverförmige Substanz sein und/oder in Pulverform eingemischt sein. Das wenigstens eine Rheologie-Additiv kann Zellulose und/oder ein Zellulose-Derivat aufweisen und/oder aus Zellulose und/oder aus einem Zellulose-Derivat bestehen. Dies kann kostengünstig bewerkstelligt werden und eine einfache Lagerung für die spätere Herstellung der Druckpaste ermöglichen.

Gemäß einer noch weiter bevorzugten Ausgestaltung kann das wenigstens eine Rheologie-Additiv zur Erzeugung eines thixotropen Fließverhaltens ausgebildet sein. Das Fließverhalten während des Drucks kann hierdurch begünstigt werden und gleichzeitig ein unerwünschtes Zerfließen nach oder vor dem Druck verhindert werden. Der dreidimensionale Siebdruck mit einer solchen Druckpaste kann hierdurch begünstigt und eine hohe Druckpräzision erzielt werden.

Gemäß einer noch weiter bevorzugten Ausgestaltung kann das wenigstens eine Rheologie-Additiv für mittelpolare lösemittelhaltige und/oder lösemittelfreie Systeme ausgebildet sein. Das Rheologie-Additiv kann mithin insbesondere für mittelpolare lösemittelhaltige und/oder lösemittelfreie Systeme eingesetzt werden, wodurch für ein solches System eine besonders hohe Funktionalität gewährleistet wird.

Gemäß einer noch weiter bevorzugten Ausgestaltung kann das wenigstens eine Rheologie-Additiv für hochpolare oder niedrigpolare lösemittelhaltige und/oder lösemittelfreie Systeme ausgebildet sein. Das Rheologie-Additiv kann mithin insbesondere für hochpolare oder niedrigpolare lösemittelhaltige und/oder lösemittelfreie Systeme eingesetzt werden, wodurch für ein solches System eine besonders hohe Funktionalität gewährleistet wird.

Gemäß einer noch weiter bevorzugten Ausgestaltung kann das wenigstens eine Rheologie-Additiv als Lösung eines modifizierten Harnstoffs ausgebildet ist. Ein solches Rheologie-Additiv kann besonders kostengünstig bereitgestellt werden und damit eine wirtschaftliche Fertigung gewährleisten. Ein solches Additiv baut nach dem Einrühren in die Druckpaste insbesondere eine dreidimensionale Netzwerkstruktur auf. Ein resultierendes thixotropes Fließverhalten ist besonders vorteilhaft zur Vermeidung von Bodensatzbildung und zur Erhöhung des Standvermögens geeignet. Der Verlauf der Druckpaste wird dabei nicht oder kaum verschlechtert.

Gemäß einer noch weiter bevorzugten Ausgestaltung kann das wenigstens eine Rheologie-Additiv als Lösungsmittel Dimethylsulfoxid aufweisen. Ein solches Lösungsmittel gewährleistet eine geeignete Verdünnung des Additivs, ohne die Wirksamkeit zur Beeinflussung des Fließverhaltens negativ zu beeinflussen.

Gemäß einer noch weiter bevorzugten Ausgestaltung kann das wenigstens eine Rheologie-Additiv als Lösungsmittel Amidether aufweisen. Ein solches Lösungsmittel gewährleistet ebenfalls eine geeignete Verdünnung des Additivs, ohne die Wirksamkeit zur Beeinflussung des Fließverhaltens negativ zu beeinflussen.

Gemäß einer noch weiter bevorzugten Ausgestaltung kann das Rheologie-Additiv einen Massenanteil der Wirksubstanz von mindestens 20 % aufweisen, bevorzugt von mehr als 20 %, weiter bevorzugt von mehr als 30 %, weiter bevorzugt von mehr als 40% oder von 40%, weiter bevorzugt von mehr als 50% oder von 50% oder von 52%. Durch einen solchen Mindestanteil der Wirksamkeit kann bereits mit einer verhältnismäßig geringen Zugabe eine ausreichende rheologische Wirkung erzielt werden.

Gemäß einer noch weiter bevorzugten Ausgestaltung kann das Rheologie-Additiv einen Massenanteil der Wirksubstanz von weniger als 70 % aufweisen, insbesondere von weniger als 60 % oder von weniger als 55 %. Dies erlaubt eine besonders präzise Dosierung der Wirksubstanz und eine insgesamt geringe Beeinflussung der Massenanteile der weiteren Bestandteile der Druckpaste.

Gemäß einer noch weiter bevorzugten Ausgestaltung kann die Druckpaste einen Mindestbestandteil an reaktiver Tonerde und/oder Magnesiumoxid aufweisen, insbesondere einem Massenanteil an reaktiver Tonerde und/oder Magnesiumoxid von bis zu 20 % oder bis zu 15 % oder bis zu 10 %. Mit einer solchen Druckpaste können im Ergebnis sehr feine, dichte Keramikwerkstücke hergestellt werden.

Gemäß einer noch weiter bevorzugten Ausgestaltung kann die Druckpaste einen Mindestbestandteil an Bindemittel und/oder Polyvinylbutyral als Bindemittel aufweisen, insbesondere mit einem Massenanteil von wenigstens 0,05 % oder wenigstens 0,1 und/oder weniger als 1 % oder weniger als 0,5 %. Durch den Zusatz eines Bindemittels und/oder Polyvinylbutyral als Bindemittel ergibt sich ferner eine noch bessere Verarbeitbarkeit der Druckpaste im Wege des dreidimensionalen Siebdrucks.

Gemäß einer noch weiter bevorzugten Ausgestaltung kann die Druckpaste die folgenden Bestandteile in Massenprozent aufweisen:
- Keramischer Feststoff: 70 % bis 85 %
- Monomer(e): 7 % bis 15 %
- Oligomer(e): 5 % bis 10 %
- Photoinitiator(en): 0,01 % bis 0,1 %
- Dispergier-Additiv(e): 0,5 % bis 2 %
- Rheologie-Additiv(e): 1,5 % bis 4,5 %
- Rest unvermeidbare Verunreinigungen

Eine solche Druckpaste eignet sich in besonders vorteilhafter Weise für die Herstellung von dreidimensionalen Siebdruckwerkstücken. Es kann eine gute Druckbarkeit im Wege des dreidimensionalen Siebdrucks und mit nur geringem Aufwand eine Aushärtung durch Polymerisation, insbesondere Photopolymerisation, bewerkstelligt werden. Mit einer solchen Druckpaste lassen sich Werkstücke mit hohen Qualitätseigenschaften, insbesondere hoher Fertigungsgenauigkeit und guten mechanischen Eigenschaften, erzeugen.

Gemäß einer noch weiter bevorzugten Ausgestaltung kann die Druckpaste die folgenden Bestandteile in Massenprozent aufweisen:
- Keramischer Feststoff: 70 % bis 85 %
- Monomer(e): 7 % bis 15 %
- Oligomer(e): 5 % bis 10 %
- Photoinitiator(en): 0,01 % bis 0,1 %
- Dispergier-Additiv(e): 0,5 % bis 2 %
- Rheologie-Additiv(e): 1,5 % bis 4,5 %
- Gesonderte(s) Lösungsmittel: 0,5 % bis 1,5 %
- Rest unvermeidbare Verunreinigungen

Auch eine solche Druckpaste eignet sich vorteilhaft Weise für die Herstellung von dreidimensionalen Siebdruckwerkstücken. Es kann eine besonders gute Druckbarkeit im Wege des dreidimensionalen Siebdrucks und mit nur geringem Aufwand eine Aushärtung durch Polymerisation, insbesondere Photopolymerisation, bewerkstelligt werden. Mit einer solchen Druckpaste lassen sich Werkstücke mit hohen Qualitätseigenschaften, insbesondere hoher Fertigungsgenauigkeit und guten mechanischen Eigenschaften, erzeugen.

Gemäß einer noch weiter bevorzugten Ausgestaltung kann die Druckpaste die folgenden Bestandteile in Massenprozent aufweisen:
- Aluminiumoxid oder Aluminiumnitrid: 70 % bis 85 %
- Polyethylen Glycol (200) Diacrylat: 10 % bis 12 %
- Aliphatisches Urethan-Acrylat: 7 % bis 9 %
- Tertiobutyl Cyclohexyl Acrylat: 0,5 % bis 2 %
- Photoinitiator(en), insbesondere Ethyl Phenyl(2,4,6-trimethylbenzoyl)Phosphinat: 0,01 % bis 0,1 %
- Dispergier-Additiv(e) in Form eines hochmolekularen Block-Copolymeren mit pigmentaffinen Gruppen: 0,5 % bis 2 %
- Rheologie-Additiv(e) in Form von Harnstofflösung(en): 0,5 % bis 2 %
- Dipropylenglycolmethylether: 0,5 % bis 1,5 %
- Rest unvermeidbare Verunreinigungen

Eine solche Druckpaste eignet sich noch weiter bevorzugter Weise für die Herstellung von dreidimensionalen Siebdruckwerkstücken. Es kann eine ausgezeichnete Druckbarkeit im Wege des dreidimensionalen Siebdrucks und eine besonders gut kontrollierte Aushärtung durch Polymerisation, insbesondere Photopolymerisation, erzielt werden. Mit einer solchen Druckpaste können mit hoher Wirtschaftlichkeit Werkstücke mit besonders hohen Qualitätseigenschaften erzeugt werden, insbesondere einer hohen Fertigungsgenauigkeit und guten mechanischen Eigenschaften.

Mit einer solchen Druckpaste lassen sich insbesondere für den dreidimensionalen Siebdruck geeignete Viskositäten erreichen, nämlich etwa 500 Pa s bei einer Scherrate von 0,1 s⁻¹ und/oder etwa 200 Pa s bei einer Scherrate von 1 s⁻¹ und/oder etwa 50 Pa s bei einer Scherrate von 10 s⁻¹ und/oder etwa 10 Pa s bei einer Scherrate von 200 s⁻¹ und/oder etwa 5 Pa s oder 6 Pa s bei einer Scherrate von 400 s⁻¹. Dies gewährleistet besonders vorteilhafte Druckbarkeit.

Gemäß einer noch weiter bevorzugten Ausgestaltung kann die Druckpaste die folgenden Bestandteile in Massenprozent aufweisen:
- Keramischer Feststoff: 70 % bis 85 %
- Monomer(e): 12 % bis 18 %
- Photoinitiator(en): 0,01 % bis 0,1 %
- Dispergier-Additiv(e): 0,5 % bis 2 %
- Rheologie-Additiv(e): 2 % bis 5 %
- Gesonderte(s) Lösungsmittel: 1,5 % bis 3,5 %
- Rest unvermeidbare Verunreinigungen

Auch mit einer solchen Druckpaste eignet sich in bevorzugter Weise für die Herstellung von dreidimensionalen Siebdruckwerkstücken. Es kann eine sehr gute Druckbarkeit im Wege des dreidimensionalen Siebdrucks erzielt werden. Ebenso lässt sich mit Monomeren eine gut kontrollierte Aushärtung durch Polymerisation, insbesondere Photopolymerisation, erreichen. Mit einer solchen Druckpaste können Werkstücke mit besonders hohen Qualitätseigenschaften erzeugt werden, insbesondere einer hohen Fertigungsgenauigkeit und guten mechanischen Eigenschaften.

Gemäß einer noch weiter bevorzugten Ausgestaltung kann die Druckpaste die folgenden Bestandteile in Massenprozent aufweisen:
- Zirconiumdioxid: 70 % bis 85 %
- Polyethylen Glycol (200) Diacrylat: 8 % bis 11 %
- Dipropylen Glycol Diacrylat: 3 % bis 7 %
- Tertiobutyl Cyclohexyl Acrylat: 0,5 % bis 2 %
- Photoinitiator(en), insbesondere Ethyl Phenyl(2,4,6-trimethylbenzoyl)Phosphinat: 0,01 % bis 0,1 %
- Dispergier-Additiv(e) in Form eines Copolymeren mit sauren Gruppen: 0,5 % bis 2 %
- Rheologie-Additiv(e) in Form von Harnstofflösung(en): 2,5 % bis 4,5 %
- Dipropylenglycolmethylether: 1,5 % bis 3,5 %
- Rest unvermeidbare Verunreinigungen

Schließlich eignet sich auch eine solche Druckpaste in besonders bevorzugter Weise für die Herstellung von dreidimensionalen Siebdruckwerkstücken. Eine gute Druckbarkeit im Wege des dreidimensionalen Siebdrucks kann erreicht werden. Zudem kann mit nur geringem Aufwand eine gut kontrollierte Aushärtung durch Polymerisation, insbesondere Photopolymerisation, umgesetzt werden. Mit einer solchen Druckpaste können mit hoher Wirtschaftlichkeit Werkstücke mit besonders hohen Qualitätseigenschaften erzeugt werden, insbesondere einer hohen Fertigungsgenauigkeit und guten mechanischen Eigenschaften.

Ein weiterer Aspekt der vorliegenden Erfindung betrifft ein Verfahren zur Herstellung eines dreidimensionalen Siebdruckwerkstücks mit einer voranstehend beschriebenen Druckpaste.

Ein noch weiterer Aspekt der vorliegenden Erfindung betrifft ein Verfahren zur Herstellung eines dreidimensionalen Siebdruckwerkstücks mit einer Druckpaste, die einen Photoinitiator als Inhaltsstoff und bevorzugt auch einen Keramikwerkstoff aufweist.

Die voranstehend beschriebenen Einzelheiten in Bezug auf die Druckpaste gelten gleichermaßen auch für das Verfahren zur Herstellung eines dreidimensionalen Siebdruckwerkstücks gemäß den weiteren Aspekten der vorliegenden Erfindung.

Nachstehend wird die Erfindung anhand von Ausführungsbeispielen in Verbindung mit zugehörigen Zeichnungen näher erläutert.

Es zeigen:
- Fig. 1: eine schematische Darstellung der Zusammensetzung einer Druckpaste gemäß einem Ausführungsbeispiel der vorliegenden Erfindung vor der Aushärtung;
- Fig. 2: eine schematische Darstellung der Druckpaste gemäß Figur 1 nach erfolgter Photopolymerisation;
- Fig. 3: eine schematische Darstellung der Zusammensetzung einer Druckpaste gemäß einem weiteren Ausführungsbeispiel der vorliegenden Erfindung;
- Fig. 4: eine schematische Darstellung der Druckpaste gemäß Figur 3 nach erfolgter Photopolymerisation.

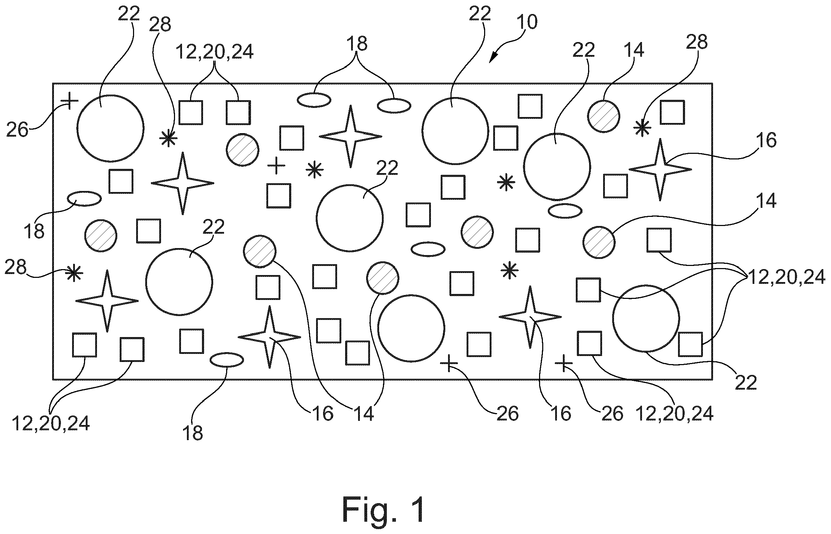

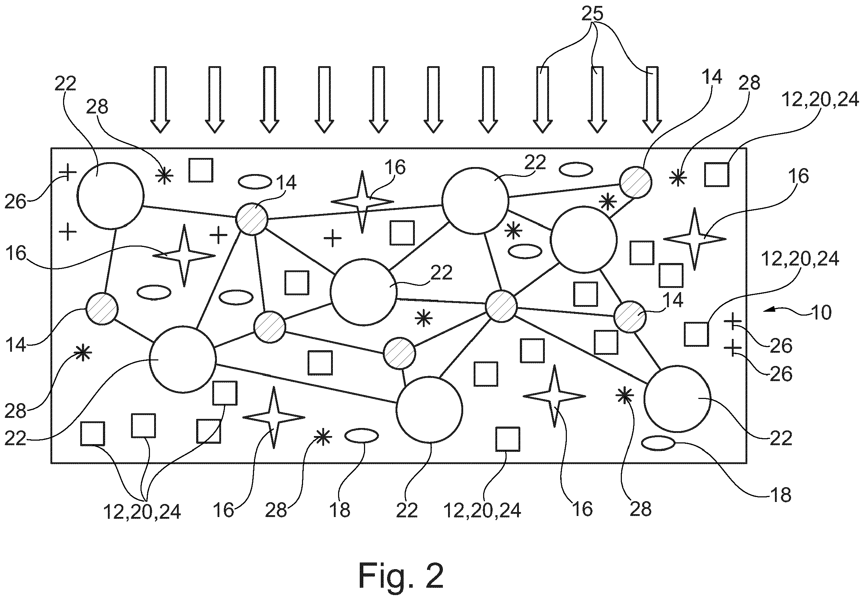

Die Figur 1 zeigt eine schematische Darstellung der Zusammensetzung einer Druckpaste 10 gemäß einem Ausführungsbeispiel der vorliegenden Erfindung vor der Aushärtung und Figur 2 zeigt eine schematische Darstellung der Druckpaste 10 gemäß Figur 1 nach erfolgter Photopolymerisation.

Die Druckpaste 10 ist insbesondere zur Herstellung von dreidimensionalen Siebdruckwerkstücken geeignet und weist einen Feststoff 12, wenigstens einen Monomer 14, einen Photoinitiator 16 und wenigstens ein Rheologie-Additiv 18 auf. Der Feststoff 12 kann wenigstens einen Keramikwerkstoff 20 und/oder wenigstens einen Nichtmetallwerkstoff aufweisen und der Massenanteil des Feststoffs 12 kann mindestens 50 % betragen. Ferner kann die Druckpaste in bevorzugter Weise wenigstens einen Oligomer 22 aufweisen.

Die Druckpaste 10 kann durch Photopolymerisation in nur kurzer Zeit und mit geringem Aufwand ausgehärtet werden, wie sich unter Bezugnahme auf die Figur 2 ergibt. So ist der Photoinitiator 16 insbesondere eine chemische Verbindung, die nach Absorption von Licht 25, insbesondere von Ultraviolettlicht, in einer Photolyse-Reaktion zerfällt und reaktive Spezies bildet. Hierdurch kann eine Reaktion initiiert werden, bei der er sich insbesondere um eine Polymerisation handelt. Es kann sich mithin um eine Polymerisationsreaktion handeln.

Eine solche durch den Photoinitiator 16 ausgelöste Polymerisationsreaktion ist insbesondere eine Kettenreaktion, bei der die Monomere 14 zu Polymeren und/oder die Monomere 14 und die Oligomere 22 zu Polymeren verknüpft werden, wie in Figur 2 schematisch dargestellt ist. Die Monomere 14 besitzen Mehrfachbindungen, an denen Radikale angreifen. Diese Mehrfachbindungen lösen sich auf und die Monomere 14 beziehungsweise Oligomere 22 werden aneinandergebunden. Eine solche Reaktion kann durch den Photoinitiator 16 mit nur geringem Aufwand initiiert werden und ermöglicht eine Aushärtung beziehungsweise Trocknung der Druckpaste 10 in nur kurzer Verfahrensdauer.

In der Ausführungsform gemäß Figuren 1 und 2 kann es sich bei dem Feststoff 12 insbesondere um Aluminiumoxid 24 handeln. Ebenso kann es sich bei dem Feststoff 12 um Aluminiumnitrid handeln, was hier nicht näher dargestellt ist.

Der Feststoff 12 kann in Pulverform erzeugt und/oder eingemischt sein und/oder aus Pulvermaterial bestehen. Der Feststoff 12 kann aus einem Keramikpulver, insbesondere Aluminiumoxid 24 in Pulverform, erzeugt sein und/oder bestehen.

Der Massenanteil des Feststoffs 12 kann bevorzugt mehr als 50 %, bevorzugt mehr als 55 %, weiter bevorzugt mehr als 60 %, noch weiter bevorzugt mehr als 65 %, noch weiter bevorzugt mehr als 70 %, noch weiter bevorzugt von mehr als 75 % betragen. Ferner kann der Massenanteil des Feststoffs 12 und/oder des Aluminiumoxids weniger als 90 %, bevorzugt weniger als 85 %, weiter bevorzugt weniger als 80 % betragen.

Der Photoinitiator 16 kann Ethyl Phenyl(2,4,6-trimethylbenzoyl)Phosphinat aufweisen, bevorzugt mit einer Reinheit von mindestens 90 % oder mindestens 95 %. Ebenso kann der Photoinitiator 16 ein Hydroxyacetophenon aufweisen. Ferner kann der der Photoinitiator 16 1-Hydroxycyclohexyl Phenyl Keton aufweisen.

Der Massenanteil des Photoinitiators 16 kann weniger als 2 % betragen, bevorzugt weniger als 1,5 % oder weniger als 1 %, bevorzugt weniger als 0,5 %, weiter bevorzugt weniger als 0,1 %. Ebenso kann der Massenanteil des Photoinitiators 16 mindestens 0,01 % betragen, bevorzugt mehr als 0,01 % oder mehr als 0,02 % oder mehr als 0,03 % oder etwa 0,04%.

Das wenigstens eine Monomer 14 oder wenigstens ein Monomer 14 kann ein Acrylatmonomer sein, insbesondere ein Diacrylat, oder mehrere oder sämtliche Monomere 14 können Acrylatmonomere sein. Das wenigstens eine Monomer 14 oder wenigstens ein Monomer 14 kann ein monofunktioneller oder bifunktioneller Monomer 14 sein und/oder mehrere oder sämtliche Monomere 14 können monofunktionelle und/oder bifunktionelle Monomere 14 sein oder höchstens bifunktionelle Monomere 14.

Der Massenanteil des Monomers 14 oder der Monomere 14 kann wenigstens 5 % betragen, bevorzugt mehr als 5 %, weiter bevorzugt mehr als 6 %, weiter bevorzugt mehr als 7 %, weiter bevorzugt mehr als 8 %, weiter bevorzugt mehr als 9 %, weiter bevorzugt mehr als 10 %, weiter bevorzugt mehr als 11 %, weiter bevorzugt mehr als 12 % oder etwa 12%. Der Massenanteil des Monomers 14 oder der Monomere 14 kann ferner weniger als 15 % betragen, bevorzugt weniger als 14 %, weiter bevorzugt weniger als 13 %, weiter bevorzugt weniger als 12,5 %.

In der Ausführungsform gemäß Figuren 1 und 2 können unterschiedliche Monomere 14 vorgesehen sein. Das wenigstens eine Monomer 14 oder wenigstens ein Monomer 14 kann ein Polyethylen Glycol (200) Diacrylat sein beziehungsweise aufweisen. Der Massenanteil an Polyethylen Glycol (200) Diacrylat kann wenigstens 5 % betragen, bevorzugt mehr als 5 %, weiter bevorzugt mehr als 6 %, weiter bevorzugt mehr als 7 %, weiter bevorzugt mehr als 8 %, weiter bevorzugt mehr als 9 %, weiter bevorzugt mehr als 10 %, weiter bevorzugt mehr als 11 %, weiter bevorzugt mehr 11 %. Ferner kann der Massenanteil an Polyethylen Glycol (200) Diacrylat weniger als 15 % betragen, bevorzugt weniger als 14 %, weiter bevorzugt weniger als 13 %, weiter bevorzugt weniger als 12 %.

Wenigstens ein weiteres Monomer 14 kann ein Tertiobutyl Cyclohexyl Acrylat sein beziehungsweis aufweisen. Der Massenanteil an Tertiobutyl Cyclohexyl Acrylat kann wenigstens 0,5 % betragen, bevorzugt mehr als 0,5 %, weiter bevorzugt mehr als 0,6 %, weiter bevorzugt mehr als 0,7 %, weiter bevorzugt mehr als 0,8 %, weiter bevorzugt mehr als 0,9 %, weiter bevorzugt etwa 1 %. Ferner kann der Massenanteil an Tertiobutyl Cyclohexyl Acrylat weniger als 2 % betragen, bevorzugt weniger als 1,5 %, weiter bevorzugt weniger als 1,2 %, weiter bevorzugt weniger als 1,1 %.

Das Oligomer 22 kann bevorzugt ein Acrylat-Oligomer sein. Es kann sich bei dem Oligomer 22 um einen Polyester oder Polyether handeln. Bevorzugt kann das wenigstens eine Oligomer 22 ein aliphatisches Urethan-Acrylat sein, insbesondere ein aliphatisches polyester- basiertes und/oder polyether-basiertes Urethan-Acrylat-Oligomer.

Der Massenanteil des Oligomers 22 kann wenigstens 5 % betragen, bevorzugt mehr als 5 %, weiter bevorzugt mehr als 6 %, weiter bevorzugt mehr als 7 %, weiter bevorzugt mehr als 8 % oder etwa 8 %. Ebenso kann der Massenanteil des Oligomers 22 weniger als 15 % betragen, bevorzugt weniger als 12 %, weiter bevorzugt weniger als 10 %, weiter bevorzugt weniger als 9 %.

Die Druckpaste 10 kann ferner ein gesondertes Lösungsmittel 26, insbesondere ein organisches Lösungsmittel 26, aufweisen. Das gesonderte Lösungsmittel 26 kann Glykolehter aufweisen, insbesondere Dipropylenglycolmethylether und/oder Dipropylenglykolmonomethylether. Der Massenanteil an gesondertem Lösungsmittel 26 kann wenigstens 0,5 % betragen, bevorzugt mehr als 0,5 %, weiter bevorzugt mehr als 0,6 %, weiter bevorzugt mehr als 0,7 %, weiter bevorzugt mehr als 0,8 %, weiter bevorzugt mehr als 0,9 %, weiter bevorzugt etwa 1 %. Ferner kann der Massenanteil an gesondertem Lösungsmittel 26 weniger als 2 % betragen, bevorzugt weniger als 1,5 %, weiter bevorzugt weniger als 1,2 %, weiter bevorzugt weniger als 1,1 %.

Die Druckpaste 10 kann weiter bevorzugt zumindest ein Dispergier-Additiv 28 aufweisen. Es kann sich bei dem Dispergier-Additiv 28 um ein Netz- und Dispergier-Additiv handeln. Das Dispergier-Additiv 28 kann eine Lösung eines hochmolekularen Block-Copolymeren mit pigmentaffinen Gruppen sein.

Der Massenanteil des Dispergier-Additivs 28 kann wenigstens 0,5 % betragen, bevorzugt mehr als 0,5 %, weiter bevorzugt mehr als 0,6 %, weiter bevorzugt mehr als 0,7 %, weiter bevorzugt mehr als 0,8 %, weiter bevorzugt mehr als 0,9 %, weiter bevorzugt etwa 1 %. Ebenso kann der Massenanteil des Dispergier-Additivs 28 weniger als 2 % betragen, bevorzugt weniger als 1,5 %, weiter bevorzugt weniger als 1,2 %, weiter bevorzugt weniger als 1,1 %.

Die Druckpaste 10 in der Ausführungsform gemäß Figuren 1 und 2 kann ferner eine Mehrzahl von unterschiedlichen Rheologie-Additiven 18 aufweisen. Der Massenanteil des Rheologie-Additivs 18 oder der Rheologie-Additive 18 kann wenigstens 1 % betragen, bevorzugt mehr als 1 %, weiter bevorzugt mehr als 1,5 %, weiter bevorzugt mehr als 2 %, weiter bevorzugt mehr als 2,5 %, weiter bevorzugt mehr als 3 %, weiter bevorzugt mehr als 3,5 %, weiter bevorzugt etwa 3,6 % oder 3,6 %. Ebenso kann der Massenanteil des Rheologie-Additivs 18 oder der Rheologie-Additive 18 weniger als 5 % betragen, bevorzugt weniger als 4,5 %, weiter bevorzugt weniger als 4 %, weiter bevorzugt weniger als 3,8 %.

Das wenigstens eine Rheologie-Additiv 18 oder die Rheologie-Additive 18 können zur Erzeugung eines thixotropen Fließverhaltens ausgebildet sein, nämlich vor Aushärtung beziehungsweise Photopolymerisation.

Das wenigstens eine Rheologie-Additiv 18 kann als Lösung eines modifizierten Harnstoffs ausgebildet sein und/oder als Lösungsmittel Dimethylsulfoxid aufweisen.

Die Druckpaste 10 gemäß dem Ausführungsbeispiel in den Figuren 1 und 2 kann vor Aushärtung die folgenden Bestandteile in Massenprozent aufweisen:
- Keramischer Feststoff: 70 % bis 85 %
- Monomer(e): 7 % bis 15 %
- Oligomer(e): 5 % bis 10 %
- Photoinitiator(en): 0,01 % bis 0,1 %
- Dispergier-Additiv(e): 0,5 % bis 2 %
- Rheologie-Additiv(e): 1,5 % bis 4,5 %
- Gesonderte(s) Lösungsmittel: 0,5 % bis 1,5 %
- Rest unvermeidbare Verunreinigungen

Weiter bevorzugt kann die Druckpaste 10 gemäß dem Ausführungsbeispiel in den Figuren 1 und 2 vor Aushärtung die folgenden Bestandteile in Massenprozent aufweisen:
- Aluminiumoxid oder Aluminiumnitrid: 70 % bis 85 %
- Polyethylen Glycol (200) Diacrylat: 10 % bis 12 %
- Aliphatisches Urethan-Acrylat: 7 % bis 9 %
- Tertiobutyl Cyclohexyl Acrylat: 0,5 % bis 2 %
- Photoinitiator(en), insbesondere Ethyl Phenyl(2,4,6-trimethylbenzoyl)Phosphinat: 0,01 % bis 0,1 %
- Dispergier-Additiv(e) in Form eines hochmolekularen Block-Copolymeren mit pigmentaffinen Gruppen: 0,5 % bis 2 %
- Rheologie-Additiv(e) in Form von Harnstofflösung(en): 0,5 % bis 2 %
- Dipropylenglycolmethylether: 0,5 % bis 1,5 %
- Rest unvermeidbare Verunreinigungen

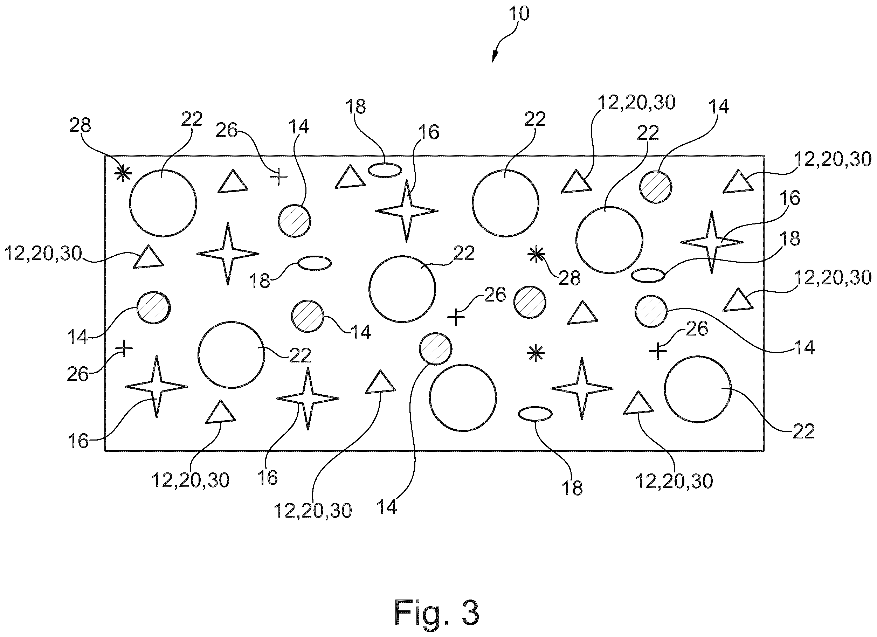

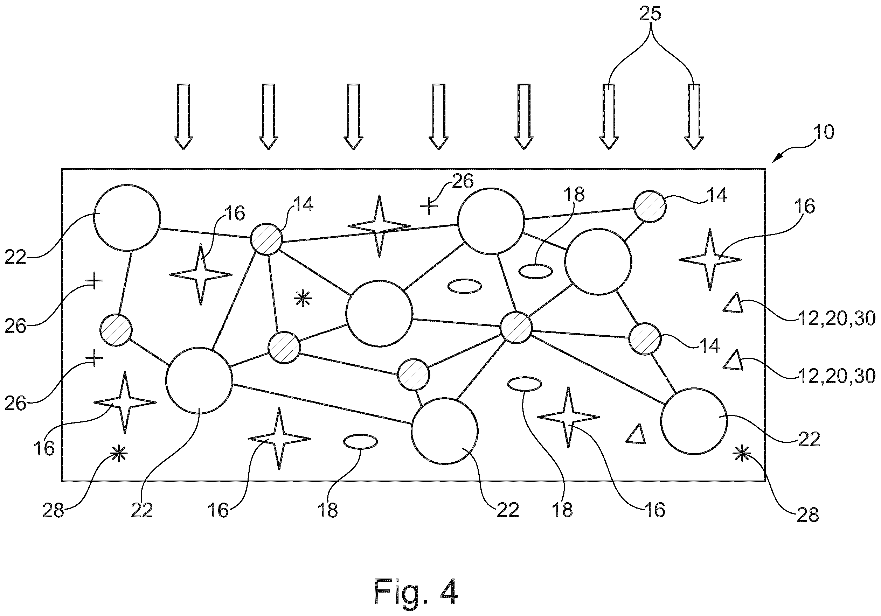

Die Figur 3 zeigt eine schematische Darstellung der Zusammensetzung einer Druckpaste 10 gemäß einem weiteren Ausführungsbeispiel der vorliegenden Erfindung vor der Aushärtung und Figur 4 zeigt eine schematische Darstellung der Druckpaste 10 gemäß Figur 4 nach erfolgter Photopolymerisation.

Als wesentlicher Unterschied gegenüber dem Ausführungsbeispiel in den Figuren 1 und 2 kann die Druckpaste 10 in dem Ausführungsbeispiel gemäß Figuren 3 und 4 einen Feststoff 12 aufweisen, bei dem es sich insbesondere um Zirconiumdioxid 30 handelt.

Ferner kann bei der Druckpaste 10 gemäß dem Ausführungsbeispiel in den Figu-ren 3 und 4 das wenigstens eine Monomer 14 oder wenigstens ein Monomer 14 ein Dipropylen Glycol Diacrylat sein oder aufweisen. Der Massenanteil an Dipropylen Glycol Diacrylat kann wenigstens 1 % oder wenigstens 2 % oder wenigstens 5 % oder weniger als 10 % oder weniger als 8 % oder weniger als 7 % betragen.

Ferner kann bei der Druckpaste 10 gemäß dem Ausführungsbeispiel in den Figu-ren 3 und 4 das Dispergier-Additiv 28 ein Copolymer mit sauren Gruppen aufweisen.

Darüber hinaus kann die Druckpaste 10 in dem Ausführungsbeispiel gemäß Figu-ren 3 und 4 und in dem Ausführungsbeispiel gemäß Figuren 1 und 2 zumindest teilweise gleiche Bestandteile aufweisen.

Die Druckpaste 10 gemäß dem Ausführungsbeispiel in den Figuren 3 und 4 kann vor Aushärtung die folgenden Bestandteile in Massenprozent aufweisen:
- Keramischer Feststoff: 70 % bis 85 %
- Monomer(e): 12 % bis 18 %
- Photoinitiator(en): 0,01 % bis 0,1 %
- Dispergier-Additiv(e): 0,5 % bis 2 %
- Rheologie-Additiv(e): 2 % bis 5 %
- Gesonderte(s) Lösungsmittel: 1,5 % bis 3,5 %
- Rest unvermeidbare Verunreinigungen

Weiter bevorzugt kann die Druckpaste 10 gemäß dem Ausführungsbeispiel in den Figuren 3 und 4 vor Aushärtung die folgenden Bestandteile in Massenprozent aufweisen:
- Zirconiumdioxid: 70 % bis 85 %
- Polyethylen Glycol (200) Diacrylat: 8 % bis 11 %
- Dipropylen Glycol Diacrylat: 3 % bis 7 %
- Tertiobutyl Cyclohexyl Acrylat: 0,5 % bis 2 %
- Photoinitiator(en), insbesondere Ethyl Phenyl(2,4,6-trimethylbenzoyl)Phosphinat: 0,01 % bis 0,1 %
- Dispergier-Additiv(e) in Form eines Copolymeren mit sauren Gruppen: 0,5 % bis 2 %
- Rheologie-Additiv(e) in Form von Harnstofflösung(en): 2,5 % bis 4,5 %
- Dipropylenglycolmethylether: 1,5 % bis 3,5 %
- Rest unvermeidbare Verunreinigungen

Bei einem Verfahren zur Herstellung eines dreidimensionalen Siebdruckwerkstücks kann mit einer Druckpaste 10 gemäß voranstehender Beschreibung ein schichtweiser Werkstückaufbau durch wiederholten Druck vorgenommen werden.

Hierzu kann die Druckpaste 10 mittels eines hier nicht näher dargestellten Rakels durch ein hier ebenfalls nicht näher dargestelltes Drucksieb gepresst und auf eine Druckunterlage oder auf ein bereits teilweise aufgebautes Siebdruckwerkstück aufgetragen werden. Im Anschluss an den Druck kann bei einem solchen Verfahren eine Aushärtung der jeweiligen Druckschicht durch Photopolymerisation vorgenommen werden.

## Patentansprüche

1. Druckpaste, insbesondere zur Herstellung von dreidimensionalen Siebdruckwerkstücken, mit einem Feststoff, mit wenigstens einem Monomer, mit einem Photoinitiator und mit wenigstens einem Rheologie-Additiv, wobei der Feststoff wenigstens einen Keramikwerkstoff und/oder wenigstens einen Nichtmetallwerkstoff aufweist und wobei der Massenanteil des Feststoffs mindestens 50 % beträgt.

2. Druckpaste nach Anspruch 1, **dadurch gekennzeichnet, dass** der Feststoff eine Oxidkeramik und/oder eine Nicht-Oxidkeramik aufweist und/oder dass der Feststoff Aluminiumnitrid und/oder Aluminiumoxid und/oder Zirconiumdioxid und/oder Graphit aufweist.

3. Druckpaste nach einem der vorstehenden Ansprüche, **dadurch gekennzeichnet, dass** der Massenanteil des Feststoffs und/oder des wenigstens einen Keramikwerkstoffs und/oder des Aluminiumnitrids und/oder Aluminiumoxids mehr als 50 %, bevorzugt mehr als 55 %, weiter bevorzugt mehr als 60 %, noch weiter bevorzugt mehr als 65 %, noch weiter bevorzugt mehr als 70 %, noch weiter bevorzugt von mehr als 75 % beträgt.

4. Druckpaste nach einem der vorstehenden Ansprüche, **dadurch gekennzeichnet, dass** der Massenanteil des Feststoffs und/oder des wenigstens einen Keramikwerkstoffs und/oder des Aluminiumnitrids und/oder Aluminiumoxids weniger als 90 %, bevorzugt weniger als 85 %, weiter bevorzugt weniger als 80 % beträgt.

5. Druckpaste nach einem der vorstehenden Ansprüche, **dadurch gekennzeichnet, dass** der Photoinitiator Ethyl Phenyl(2,4,6-trimethylbenzoyl)Phosphinat aufweist, bevorzugt mit einer Reinheit von mindestens 90 % oder mindestens 95 %.

6. Druckpaste nach einem der vorstehenden Ansprüche, **dadurch gekennzeichnet, dass** der Massenanteil des Photoinitiators weniger als 2 % beträgt, bevorzugt weniger als 1,5 % oder weniger als 1 %, bevorzugt weniger als 0,5 %, weiter bevorzugt weniger als 0,1 %.

7. Druckpaste nach einem der vorstehenden Ansprüche, **dadurch gekennzeichnet, dass** das wenigstens eine Monomer oder wenigstens ein Monomer ein Acrylatmonomer ist, insbesondere ein Diacrylat, oder dass mehrere oder sämtliche Monomere Acrylatmonomere sind.

8. Druckpaste nach einem der vorstehenden Ansprüche, **dadurch gekennzeichnet, dass** der Massenanteil des Monomers oder der Monomere wenigstens 5 % beträgt, bevorzugt mehr als 5 %, weiter bevorzugt mehr als 6 %, weiter bevorzugt mehr als 7 %, weiter bevorzugt mehr als 8 %, weiter bevorzugt mehr als 9 %, weiter bevorzugt mehr als 10 %, weiter bevorzugt mehr als 11 %, weiter bevorzugt mehr als 12 % oder etwa 12%.

9. Druckpaste nach einem der vorstehenden Ansprüche, **dadurch gekennzeichnet, dass** der Massenanteil des Monomers oder der Monomere weniger als 15 % beträgt, bevorzugt weniger als 14 %, weiter bevorzugt weniger als 13 %, weiter bevorzugt weniger als 12,5 %.

10. Druckpaste nach einem der vorstehenden Ansprüche, **gekennzeichnet durch** zumindest ein Dispergier-Additiv, bevorzugt mit einem Massenanteil des Dispergier-Additivs von wenigstens 0,5 %, bevorzugt mehr als 0,5 %, weiter bevorzugt mehr als 0,6 %, weiter bevorzugt mehr als 0,7 %, weiter bevorzugt mehr als 0,8 %, weiter bevorzugt mehr als 0,9 %, weiter bevorzugt etwa 1 %.

11. Druckpaste nach einem der vorstehenden Ansprüche, **dadurch gekennzeichnet, dass** der Massenanteil des Rheologie-Additivs oder der Rheologie-Additive wenigstens 1 % beträgt, bevorzugt mehr als 1 %, weiter bevorzugt mehr als 1,5 %, weiter bevorzugt mehr als 2 %, weiter bevorzugt mehr als 2,5 %, weiter bevorzugt mehr als 3 %, weiter bevorzugt mehr als 3,5 %, weiter bevorzugt etwa 3,6 % oder 3,6 %.

12. Druckpaste nach einem der vorstehenden Ansprüche, **dadurch gekennzeichnet, dass** der Massenanteil des Rheologie-Additivs oder der Rheologie-Additive weniger als 5 % beträgt, bevorzugt weniger als 4,5 %, weiter bevorzugt weniger als 4 %, weiter bevorzugt weniger als 3,8 %.

13. Druckpaste nach einem der vorstehenden Ansprüche, **gekennzeichnet durch** die folgenden Bestandteile in Massenprozent:
- Keramischer Feststoff: 70 % bis 85 %
- Monomer(e): 7 % bis 15 %
- Oligomer(e): 5 % bis 10 %
- Photoinitiator(en): 0,01 % bis 0,1 %
- Dispergier-Additiv(e): 0,5 % bis 2 %
- Rheologie-Additiv(e): 1,5 % bis 4,5 %
- Gesonderte(s) Lösungsmittel: 0,5 % bis 1,5 %
- Rest unvermeidbare Verunreinigungen

14. Druckpaste nach einem der vorstehenden Ansprüche, **gekennzeichnet durch** die folgenden Bestandteile in Massenprozent:
- Aluminiumoxid oder Aluminiumnitrid: 70 % bis 85 %
- Polyethylen Glycol (200) Diacrylat: 10 % bis 12 %
- Aliphatisches Urethan-Acrylat: 7 % bis 9 %
- Tertiobutyl Cyclohexyl Acrylat: 0,5 % bis 2 %
- Photoinitiator(en), insbesondere Ethyl Phenyl(2,4,6-trimethylbenzoyl)Phosphinat: 0,01 % bis 0,1 %
- Dispergier-Additiv(e) in Form eines hochmolekularen Block-Copolymeren mit pigmentaffinen Gruppen: 0,5 % bis 2 %
- Rheologie-Additiv(e) in Form von Harnstofflösung(en): 0,5 % bis 2 %
- Dipropylenglycolmethylether: 0,5 % bis 1,5 %
- Rest unvermeidbare Verunreinigungen

15. Verfahren zur Herstellung eines dreidimensionalen Siebdruckwerkstücks mit einer Druckpaste nach einem der vorstehenden Ansprüche.
